# EUROPÄISCHE PATENTSCHRIFT

(11) **EP 0 775 354 B1**
(45) Veröffentlichungstag und Bekanntmachung des Hinweises auf die Patenterteilung: **10.03.1999**
(21) Anmeldenummer: 95929837.3
(22) Anmeldetag: 10.08.1995
(51) Int. Cl.: G10K 11/172

(54) **SCHALL-ABSORBER**
SOUND ABSORBER
ABSORBANT ACOUSTIQUE

(30) Priorität: 12.08.1994 DE 4428583
(43) Veröffentlichungstag der Anmeldung: 28.05.1997
(73) Patentinhaber: Illbruck GmbH, D-51381 Leverkusen (DE)
(72) Erfinder: BRÜCK, Eduard, D-51381 Leverkusen (DE); OETKEN, Joachim, D-51399 Burscheid (DE)
(74) Vertreter: Müller, Enno, Dipl.-Ing.
(86) Internationale Anmeldenummer: EP9503172
(87) Internationale Veröffentlichungsnummer: WO9605591

(56) Entgegenhaltungen:
- EP-A- 0 214 559
- EP-A- 0 255 473
- DE-A- 4 011 705
- DE-U- 9 215 132

## Beschreibung

Die Erfindung betrifft einen Schall-Absorber mit einem Bodenteil und einem Strukturteil, wobei in dem Strukturteil Hohlkammern ausgebildet sind, welche Kammerwände aufweisen und kästchen- bzw. becherartig ausgebildet sind und, bei Abschluß nach außen, einem gemeinsamen, zwischen dem Strukturteil und dem Bodenteil eingeschlossenen Luftraum zugehören, und wobei weiter das Bodenteil mit dem Strukturteil verbunden ist, bspw. verschweißt ist und die Hohlkammern einseitig offen sind.

Ein solcher Absorber ist bspw. aus der DE-OS 27 58 041 bekannt. Bei dem bekannten Absorber sind die Hohlkammern des Strukturteils durch eine ebene Folie als Bodenteil abgedeckt, welche die in den einzelnen Hohlkammern enthaltenen Luftvolumina jeweils luftdicht abschließt. Weiter ist aus der DE-OS 40 11 705 eine weitere Ausführungsform eines solchen Schall-Absorbers bekannt, bei welcher das Strukturteil mit dem Bodenteil nur randseitig verbunden ist. Die Verbindung ist hier über eine elastische Dichtlippe geschaffen. Insgesamt kann der Schall-Absorber auf diese Weise im Blasverfahren hergestellt werden. Es sind auch Ausführungsformen bekannt, bei welchen jede Hohlkammer mit dem Bodenteil verbunden ist, wobei jedoch eine solche, oben offene Hohlkammer, jeweils als Helmholtz-Resonator ausgebildet ist. Bei einem aus der DE-PS 32 33 654 bekannten Schall-Absorber sind gleichfalls einzelne separierte Hohlkammern ausgebildet, welche jedoch oberseitig eine Strukturierung in Form einer Nut aufweisen.

Darüber hinaus ist zum Stand der Technik noch auf die DE-OS 40 35 177, die DE-PS 42 41 518 und das DE-GM 92 15 132 zu verweisen.

Ausgehend von dem zunächst genannten Stand der Technik wird ein technisches Problem der Erfindung darin gesehen, einen Absorber mit einem Bodenteil und einem Strukturteil anzugeben, der bei hoher schalltechnischer Wirksamkeit auch eine ausreichende mechanische Stabilität aufweist und gleichwohl rationell herstellbar ist.

Ein solcher Schall-Absorber ist zunächst und im wesentlichen beim Gegenstand des Anspruches 1 verwirklicht, wobei darauf abgestellt ist, daß zwischen dem Bodenteil und dem Strukturteil im Bereich der Hohlkammern Verschweißungen zwischen den Kammerwänden des Strukturteils und dem Bodenteil ausgebildet sind, daß die Verschweißungen punkt- oder linienförmig verlaufen, und daß Hohlkammern ausgebildet sind, deren Kammerwände bei im wesentlichen gleicher Höhenerstreckung teilweise mit dem Bodenteil verschweißt sind und teilweise freikragend auf das Bodenteil zu gerichtet sind, unter Belassung eines Luftspaltes zwischen einer Stirnfläche der Kammerwand und dem Bodenteil.

Es ist auch ein teilweise integraler randseitiger Übergang zwischen dem Bodenteil und dem Strukturteil möglich. Ein solcher Übergang ermöglicht es beispielsweise, den Schall-Absorber insgesamt aus einem schlauchartigen Rohteil, bevorzugt im Blasverfahren, zu fertigen. Hierbei kann in weiterer Einzelheit der Übergang auch in nachfolgendem Verfahrensabschnitt abgeschnitten sein. Dadurch, daß zwischen den Kammerwänden des Strukturteils und dem Bodenteil über den Flächenbereich des Schall-Absorbers verteilt Verschweißungen ausgebildet sind, ergibt sich eine hohe Stabilität. Einerseits durch die verbleibenden beabstandeten Wände des Strukturteils in bezug auf das Bodenteil und andererseits eben durch die zwischengeschalteten Verschweißungen, welche auch Ausknickungen weitgehend verhindern. Dadurch, daß gleichwohl alle Hohlkammern einem gemeinsamen, zwischen dem Strukturteil und dem Trägerteil eingeschlossen Luftraum zugehören, ist auch schalltechnisch eine vorteilhafte Ausbildung geschaffen. Es ergibt sich durch die verbleibenden, im Querschnitt relativ kleinen Verbindungsöffnungen eine merkliche Reibungsbeeinflussung bei Schallbeaufschlagung des gemeinsamen Luftraumes. In Ausgestaltung kann vorgesehen sein, daß die Verschweißungen inselartig verlaufen. Wenn dieses auch bevorzugt ist, so kann auch grundsätzlich vorgesehen sein, daß Verschweißungen, hauptsächlich linienartig, sich von den jeweiligen Rändern ausgehend bis zu einem mittleren Bereich des Schall-Absorbers erstrecken, wobei die Verschweißungen bzw. Schweißlinien nicht ineinander übergehen, sondern versetzt zueinander auslaufen. Insbesondere im Hinblick auf die angesprochenen inselartigen Verschweißungen ist ohnehin bevorzugt vorgesehen, daß die Verschweißungen versetzt zueinander angeordnet sind. Es kann auch weiter vorgesehen sein, daß die linienartigen Verschweißungen rechtwinklig zueinander verlaufen, aber in der Regel bzw. nicht unbedingt aufeinander treffen. Es sind aber auch stumpf aufeinanderstoßende Verschweißungen möglich. Sowohl bei den inselartigen Verschweißungen wie auch bei den von Randseiten des Schall-Absorbers ausgehenden, versetzt zueinander verlaufenden Verschweißungen, ergibt sich, daß die Hohlkammern in aller Regel nach unten offen sind, d. h., daß das Bodenteil eine Hohlkammer nie vollständig verschließt. Es ist jedoch möglich, daß eine Hohlkammer, bis zu dreiseitig hin, bei dem bevorzugt angegebenen rechteckigen bzw. quadratischen Grundriß einer Hohlkammer, durch Verschweißungen verschlossen ist. Hinsichtlich der Hohlkammern kann in Einzelheit auch vorgesehen sein, daß diese unterschiedliche Größen aufweisen. Dies kann sich einerseits auf die Abstände der - senkrechten - Kammerwände einer Hohlkammer in ebener Richtung beziehen, andererseits auch auf die Höhe der Hohlkammern. Besonders bevorzugt ist es, im Zusammenhang mit dem verbleibenden Luftspalt zwischen einer Stirnfläche einer Wand einer Hohlkammer und dem gegenüberliegenden Bodenteil, daß eine relativ große Hohlkammer von einer Mehrzahl von kleinen Hohlkammern umgeben ist. Die oberen Abschlußwände können gleichfalls in unterschiedlicher Höhe angeordnet sein. Bei den kleineren Hohlkammern ist hierbei bevorzugt, daß die oberen Abschlußwände zugleich auch auf einem niedrigeren Höhenniveau angeordnet sind als bei den großen Hohlkammern. Das Ausgangsmaterial kann bspw. Propylen, bevorzugt mit Glasfaser versetzt, sein. Es ist auch weiterhin bevorzugt, daß bei integralem Übergang zwischen dem Bodenteil und dem Strukturteil das Bodenteil und das Strukturteil unterschiedliche (Ausgangs-) Wandstärken aufweisen. Im Hinblick auf die bereits weiter oben angesprochene schlauchartige Aus; gangsgestaltung des Materials für das Bodenteil und das Strukturteil besitzt ein solcher Schlauchabschnitt entsprechend über seinen Umfang unterschiedliche Wandstärken. Dies kann bspw. im Extrusionsverfahren erreicht sein. Es ist auch von Bedeutung, daß es sich um ein Gesamt-Bauteil handelt, das im Extrusionsblasformverfahren hergestellt ist. Es liegt herstellungsmäßig Einteiligkeit vor, wenn auch diese nicht immer beim fertigen Produkt ohne weiteres erkennbar ist. Von Bedeutung ist weiterhin, daß die Hohlkammern derart versetzt zueinander angeordnet sind, daß sich jedenfalls nicht in einer Haupt-Längsrichtung oder in einer Haupt-Querrichtung, weiter bevorzugt im wesentlichen in keiner Richtung des Schall-Absorbers eine durchgehende Knicklinie ergeben kann. Eine solche Anordnung ist weiterhin auch für eine integrale Stabilität des Gesamt-Schall-Absorbers von Bedeutung. Dies auch im Hinblick auf die beschriebenen Wände der Hohlkammern, die frei nach unten kragend, jedoch ohne das Bodenteil zu berühren, ausgebildet sind. Eine solche integrale Stabilität ist von Bedeutung bspw. bei Einsatz eines solchen Schall-Absorbers als Motorraumabdeckung. Auch durch eine hiermit verbundene sehr starke Schwingungsbeanspruchung kann es nicht zu einen Aufeinanderschlagen der freikragenden Kammerwände und den Bodenteil kommen, selbst bei schalltechnisch optimal geringer Einstellung des verbleibenden Luftspaltes. Von weiterer Bedeutung ist auch eine Ausgestaltung des Schallabsorbers, bei welchem in dem Strukturteil und dem Bodenteil übereinstimmende Knicklinien ausgebildet sind, zur Abknickung eines Absorber-Teilbereiches. Auf diese Art läßt sich bei weiterhin integraler Ausbildung des Schall-Absorbers insgesamt eine formmäßige Gesamtanpassung bspw. an einem Motorraum erreichen. Auch hierbei können die Luftvolumina in den einzelnen Teilbereichen zusammen verbunden sein. Darüber hinaus ist es aber auch möglich, daß an einer Knicklinie insoweit eine Unterbrechung ausgebildet ist und ein Absorber-Teilbereich jeweils dann ein isoliertes Luftvolumen aufweist. Die Knicklinien können insbesondere in Einzelheit filmgelenkartig ausgebildet sein. Darüber hinaus ist bevorzugt, daß der abgeknickte Absorber-Teilbereich mit dem weiteren Teilbereich des Schall-Absorbers fest verbunden ist. Es können Verschweißungen an aufeinandertreffenden Hohlkammern ausgebildet sein. Darüber hinaus aber auch Verklebungen oder Verschraubungen. Soweit vorstehend von Verschweißungen gesprochen ist, können diese auch jeweils, auch bezüglich der Verbindung zwischen dem Strukturteil und dem Bodenteil, in einer weiteren Ausgestaltung, durch Verklebungen ersetzt sein, wenn auch Verschweißungen bevorzugt sind. Des weiteren kann das vorstehend als Bodenteil beschriebene Teil auch als Trägerteil angesprochen werden.

Nachstehend ist ist die Erfindung des weiteren anhand der beigefügten Zeichnung, die jedoch lediglich ein Ausführungsbeispiel darstellt, erläutert. Hierbei zeigt:
- Fig. 1: eine perspektivische Darstellung eines Absorbers;
- Fig. 2: einen Querschnitt durch einen Absorber gemäß Fig. 1;
- Fig. 3: eine prinzipielle Darstellung eines Absorbers mit angedeuteten Verschweißungslinien;

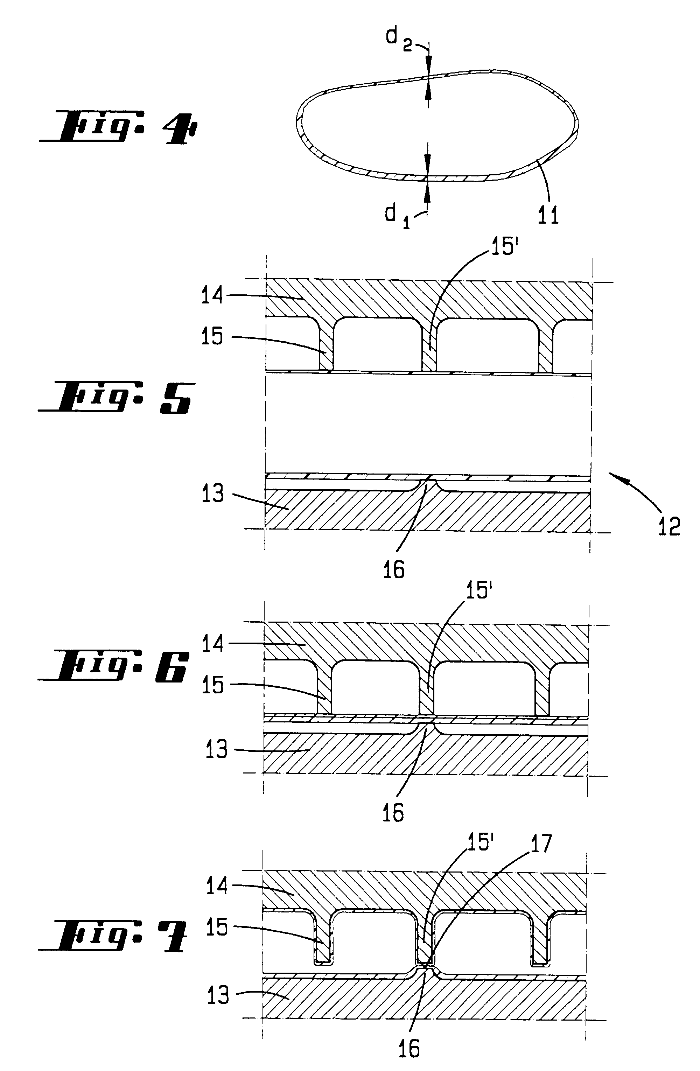

- Fig. 4: einen Querschnitt durch einen Schlauchabschnitt als Ausgangselement eines Absorbers gemäß Fig. 1;
- Fig. 5: ein Schlauchabschnitt gemäß Fig. 4, eingelegt in eine Blasform, vor Zusammenfahren der Form in einer Teil-Querschnittsdarstellung;
- Fig.: 6 eine Darstellung gemäß Fig. 5 mit eingelegtem Schlauchelement, nach einen Zusammenfahren der Form;
- Fig. 7: eine Darstellung gemäß Fig. 5 bzw. Fig. 6, nach erfolgtem Blasvorgang vor vor Entformen;
- Fig. 8: eine Draufsicht auf eine weitere Ausführungsform eines Schall-Absorbers;
- Fig. 9: eine im wesentlichen schematische Querschnittsansicht eines Schall-Absorbers mit vorbereiteter Knicklinie;
- Fig. 10: einen Schall-Absorber gemäß Fig. 9 mit abgeknicktem Teil-Bereich.

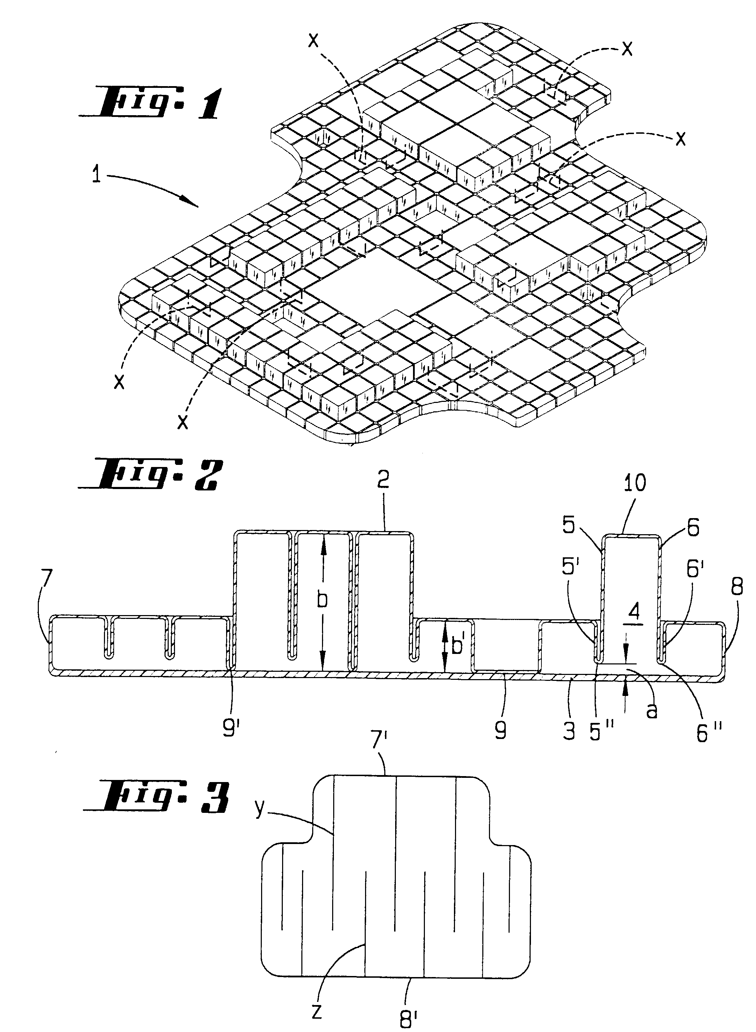

Dargestellt und beschrieben ist, zunächst mit Bezug zu Fig. 1, ein Schall-Absorber 1, der aus einem Strukturteil 2 und Bodenteil 3 (vgl. auch Fig. 2) besteht. In dem Strukturteil 2 sind einseitig offene, nämlich dem Bodenteil 3 zu offene, Hohlkammern 4 ausgebildet, welche Kammerwände 5, 6 aufweisen (siehe auch hierzu Fig. 2). Die Hohlkammern 4 sind beim Ausführungsbeispiel insgesamt kästen- oder becherartig ausgebildet. Jede Hohlkammer 4 besitzt eine obere, im wesentlichen ebenflächige obere Decke 10 und desgleichen ebenflächige, im wesentlich senkrecht ausgerichtete Kammerwände 5, 6. Das Bodenteil 3 ist mit dem Strukturteil 2 verbunden, und zwar in zwei Randbereichen 7, 8 durch integralen Übergang und an den quer dazu verlaufenden Stirnkanten durch Verschweißung. Die Bezeichnungen "Bodenteil" und "Strukturteil" sollen lediglich andeuten, daß in der Regel und bevorzugt hauptsächlich in dem Strukturteil die Hohlformen ausgebildet sind. Die Tragfunktion ergibt sich im wesentlichen durch ein Zusammenspiel von Strukturteil und Bodenteil. Eine größere Wandstärke des Bodenteils ist hierzu nicht unbedingt notwendig, wenn auch bevorzugt vorgesehen.

Wesentlich ist, daß bei dem Ausführungsbeispiel, wie auch aus Fig. 2 ersichtlich, in dem Bereich der Hohlkammern 4 zwei Verschweißungen 9, 9' zwischen dem Strukturteil und dem Bodenteil 3 ausgebildet sind. Die Verschweißungen sind beim Ausführungsbeispiel linienartig angeordnet. Im einzelnen sind sind Kammerwände 5 bzw. 6 entlang ihren dem Bodenteil 3 zugewandten Stirnseiten bzw. Spitzen bzw. Übergängen 5", 6" zwischen zwei Kammerwänden 5, 5' und dem Bodenteil 3 verschweißt. Es können auch punktartige Verschweißungen vorgesehen sein. In den Bereichen, in welchen keine Verschweißungen ausgebildet sind, und dies ist in der Regel bezüglich jedenfalls einer Kammerwand 5 einer Hohlkammer 4 der Fall, sind die Spitzen bzw. Übergänge zwischen den Kammerwänden 5, 5' - im wesentlichen bei allen vergleichbaren Kammerwänden 5 gleichförmig über den gesamten Absorber, nämlich in einem Abstand a - von dem Bodenteil 3 entfernt. Der Abstand a kann, um schalltechnisch wirksam zu sein, etwa 1 bis 4 mm betragen, bei einer Höhe einer "großen" Hohlkammer 4 von etwa 30 bis 40 mm. Bevorzugt ist in diesem Zusammenhang ein Abstand von etwa 2 mm. Dabei ist der Abstand a noch nicht einmal wesentlich an die Höhe der Hohlkammern 4 gebunden, sondern vielmehr durch die noch wirksame Luftreibung in diesem Abstand beeinflußt. Bevorzugt ist jedoch in bezug auf eine Höhe b einer Hohlkammer 4 ein Abstand im Bereich von 3 bis 7, bevorzugt etwa 5 % der Gesamthöhe. Weiterhin können die Verschweißungen x, wie in Fig. 1 angedeutet ist, inselartig verlaufen. Darüber hinaus können Verschweißungen y, z auch, wie in Fig. 3 angedeutet ist, von den jeweiligen Rändern 7 bzw. 8 ausgehend, kammartig, ineinander verzahnt, jedoch nicht miteinander verbunden (im Hinblick auf von gegenüberliegenden Rändern ausgehende Verschweißungen) verlaufen. Die Randbereiche 7', 8', von welchen die Verschweißungen y, z hierbei ausgehen, können bevorzugt solche sein, die ohnehin verschweißt sind.

Wie weiter aus Fig. 1 ersichtlich ist, und auch im weiteren bereits angesprochen ist, können die die Hohlkammern 4 unterschiedliche Größen aufweisen. Dies kann einerseits dadurch erreicht sein, daß die Grundfläche der Hohlkammern unterschiedlich groß ist, aber auch kombiniert oder alternativ dadurch, daß eine obere Decke 10 einer Hohlkammer 4 einen unterschiedlich großen Abstand b, b' (vgl. Fig. 2) zu dem Bodenteil 3 aufweist.

Bei dem verwendeten Material handelt es sich um ein thermoplastisches, verschweißbares Material. Es bietet sich bspw. Propylen, mit Glasfaser versetzt, an.

Wie sich insbesondere aus Fig. 3 ergibt, kann ein derartiger Absorber 1 aus einem extrudierten Schlauchabschnitt 11 - im Blasverfahren, wie nachstehend näher erläutert - hergestellt sein. Der Schlauchabschnitt 11 weist unterschiedliche Wandstärken d1 bzw. d2 über seinen Umfang auf. Er kann etwa extrudiert sein.

Wie sich weiter aus den Fig. 5 bis 7 ergibt, wird dieser Schlauchabschnitt 11 insgesamt in eine Blasform 12 eingeführt zur Herstellung des Absorbers gemäß Fig. 1. Hierbei sind in der Oberform 13 und der Unterform 14 Wandelemente 15 ausgebildet, welche den Zwischenräumen zwischen zwei Kammerwänden 5, 5' entsprechen. Alternativ zu der Darstellung gemäß Fig. 5, bei welcher auch in der Oberform ein Wandelement 16 ausgebildet ist, kann auch das Wandelement 15' in der Unterform mit einer entsprechend größeren Höhe ausgebildet sein. Es ist hierdurch jedoch angedeutet, daß auch das Bodenteil des Absorbers 1 strukturiert sein kann.

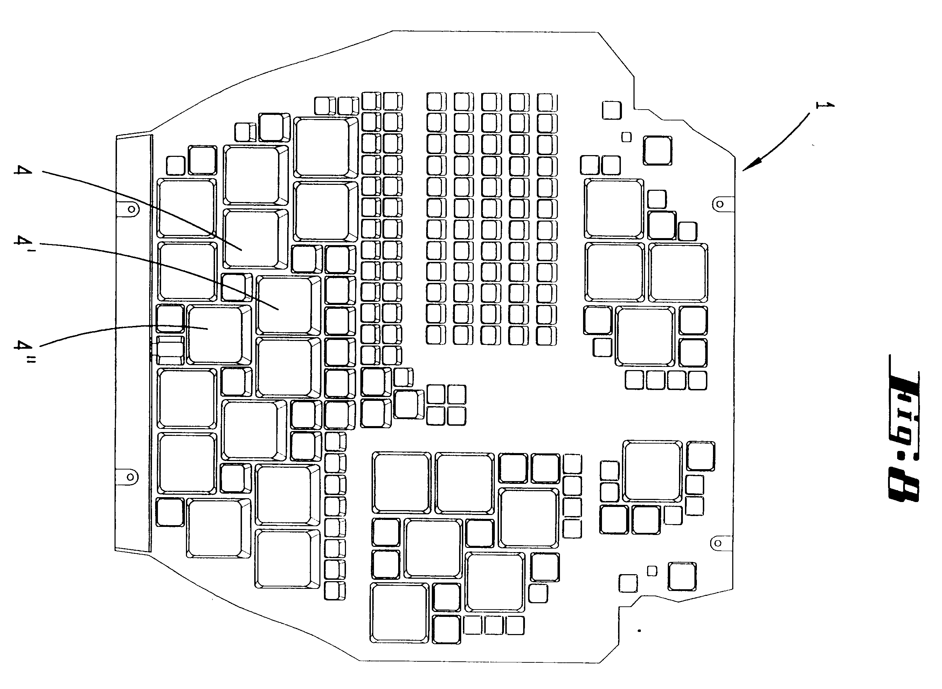

Wie sich weiter aus einem Vergleich der Fig. 6 und 7 ergibt, kann nach einem Zufahren der Form durch Einblasen von Luft zwischen die dickere und die dünnere Lage des Schlauchabschnittes 11 ein Anliegen der betreffenden Bereiche an der Oberform bzw. Unterform erreicht werden. Im Bereich der bei geschlossener Form nahe aufeinandertreffenden Wandelemente 16 und 15' ergibt sich eine Verschweißung zwischen dem Strukturteil und dem Bodenteil.

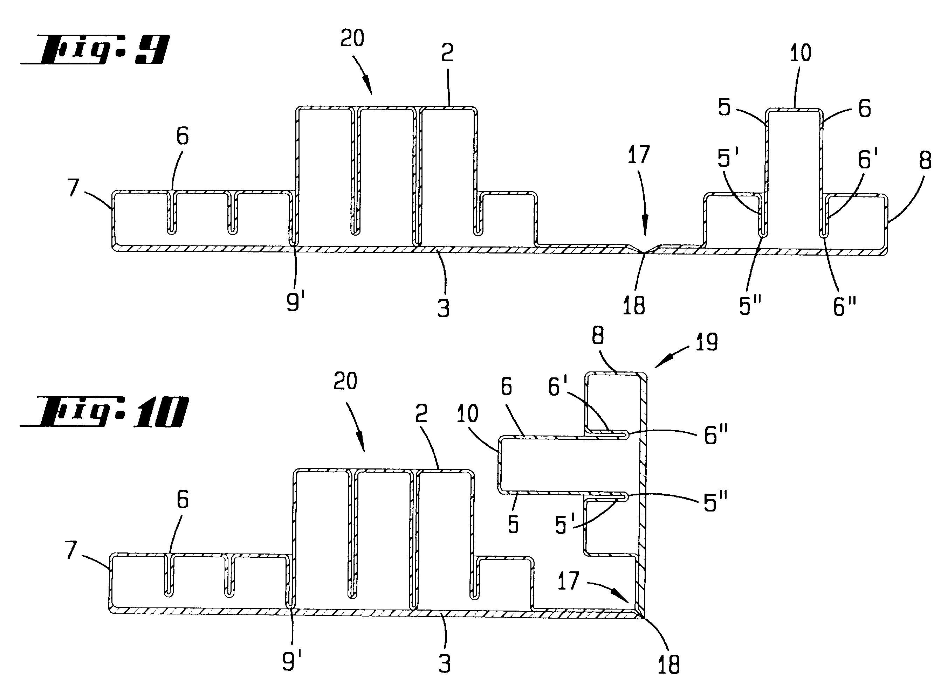

Bei dem Ausführungsbeispiel der Fig. 8 ist in Draufsicht ein weiterer Schall-Absorber dargestellt. Hierbei sind die Randbereich abgeschnitten, so daß ein integraler Übergang zwischen dem Strukturteil und dem Bodenteil nicht mehr gegeben ist, jedoch materialmäßig das Strukturteil 2 und Bodenteil 3 im Sinne einer Einteiligkeit unmittelbar zusammengehören .

Weiter ist beim Ausführungsbeispiel der Fig. 8 insbesondere zu erkennen, daß die Hohlkammern 4, 4', 4" usw. derart versetzt zueinander angeordnet sind, daß sich im wesentlichen keine durchgehende Knicklinie, insbesondere entlang Hauptachsen des Schall-Absorbers, ergibt. In einer horizontalen Erstreckungsrichtung zweier gegenüberliegender Kammerwände 5, 5' ist in der Regel eine quer dazu verlaufende Kammerwand 6 einer weiteren Hohlkammer 4 angeordnet. Hierdurch wird eine hohe integrale Stabilität des Schall-Absorbers erreicht. Zugleich ergibt sich durch die beschriebene Beabstandung a einzelner Kammerwände von dem Bodenteil 3 und die versetzte Anordnung zueinander auch noch ein gewisser schalltechnischer Effekt. Insgesamt kann der beschriebene Abstand a im Zusammenhang mit den Größen der Hohlkammern 4 und der Feineinstellung des Abstandes a zu einer frequenzbezogenen "Verstimmung" bzw. genauen Einstellung des Schall-Absorbers 1 genutzt sein.

Die versetzte Anordnung der Hohlkammern 4 zueinander und auch die unterschiedliche Größe der einzelnen Hohlkammern 4 führt zu einer sehr hohen Stabilität des Absorbers 1 insgesamt. Nicht zuletzt diese Ausbildung ermöglicht auch die teilweise freikragende Ausbildung von einzelnen Wänden der Hohlkammer 4 gegenüber dem Bodenteil 2. Trotz des geringen, beschriebenen Abstandes a kann es nicht zu solchen Verformungen des Absorbers 1 kommen, daß etwa ein Zusetzen der Abstände a sich ergibt oder ein unerwünschtes Geräusch hierdurch, auch bei Schwingungsbeanspruchung, sich entwickelt.

In Fig. 9 ist in schematischer Darstellung ein weiterer Querschnitt durch einen Schall-Absorber 1 gezeigt. Hierbei ist darauf abgehoben, daß eine das Strukturteil 2 und das Bodenteil 3 einbeziehende Knicklinie 17 ausgebildet ist. Entgegen dem vorstehend beschriebenen ist hier also ausdrücklich eine Knicklinie geschaffen und gewünscht. Im einzelnen ist diese dadurch erreicht, daß das Strukturteil 2 und das Bodenteil 3 in Übereinanderlage jeweils derart verjüngt sind, im Querschnitt keilförmig zulaufend von zwei Seiten, daß sich ein filmgelenkartiger Übergang 18 ergibt. Beidseitig der Verjüngung ist eine Flach-Aufeinanderlage des Strukturteils 2 und des Bodenteils 3 ausgebildet, um einen kollisionsfreien Raum beim Hochklappen (Fig. 10) zu erhalten. Aufgrund der insgesamt gehrungsschnittartigen Ausformung ergibt sich eine Möglichkeit zum Abklappen, wie sie in Fig. 10 dargestellt ist. Ein Absorber-Teilbereich 19 ist gegenüber einem verbleibenden Absorber-Teilbereich 20 etwa rechtwinklig hochgeklappt. Weiter kann die dargestellte abgeknickte Gestaltung gemäß Fig. 10 durch eine Verschweißung oder Verschraubung gesichert sein. Es können auch, was im einzelnen nicht dargestellt ist, durch Aufeinandertreffen von Hohlkammern 4 zwischen diesen eine Verklebung oder auch Verschweißung ausgebildet sein.

## Patentansprüche

1. Schall-Absorber (1) mit einem Bodenteil (3) und einem Strukturteil (2), wobei in dem Strukturteil (2) Hohlkammern (4) ausgebildet sind, welche Kammerwände (5, 5', 6, 6') aufweisen und kästchen- bzw. becherartig ausgebildet sind und, bei Abschluß nach außen, einem gemeinsamen, zwischen dem Strukturteil (2) und dem Bodenteil (3) eingeschlossenen Luftraum zugehören, und wobei weiter das Bodenteil (3) mit dem Strukturteil (2) verbunden ist, bspw. verschweißt ist und die Hohlkammern (4) einseitig offen sind, dadurch gekennzeichnet, daß zwischen dem Bodenteil (3) und dem Strukturteil (2) im Bereich der Hohlkammern (4) Verschweißungen (9, 9') zwischen den Kammerwänden (6, 6', 5, 5') des Strukturteils (2) und dem Bodenteil (3) ausgebildet sind, daß die Verschweißungen (9, 9') punkt- oder linienförmig verlaufen und daß Hohlkammern (4) ausgebildet sind, deren Kammerwände (5, 5', 6, 6') bei im wesentlichen gleicher Höhenerstreckung teilweise mit dem Bodenteil (3) verschweißt sind und teilweise freikragend auf das Bodenteil (3) zu gerichtet sind, unter Belassung eines Luftspaltes (a) zwischen einer Stirnfläche 5", 6" der Kammerwand (5, 5', 6, 6') und dem Bodenteil (3).

2. Schall-Absorber nach Anspruch 1, dadurch gekennzeichnet, daß ein integraler randseitiger Übergang zwischen dem Strukturteil (2) und dem Bodenteil (3) ausgebildet ist.

3. Schall-Absorber nach einem oder mehreren der vorhergehenden Ansprüche, dadurch gekennzeichnet, daß die Verschweißungen (9, 9') inselartig verlaufen.

4. Schall-Absorber nach einem oder mehreren der vorhergehenden Ansprüche, dadurch gekennzeichnet daß die Verschweißungen (9, 9') versetzt zueinander angeordnet sind.

5. Schall-Absorber nach einem oder mehreren der vorhergehenden Ansprüche, dadurch gekennzeichnet, daß bei linienartigen Verschweißungen (9, 9') rechtwinklig zueinander angeordnete Verläufe ausgebildet sind.

6. Schall-Absorber nach einem oder mehreren der vorhergehenden Ansprüche, dadurch gekennzeichnet, daß die Hohlkammern (4) unterschiedliche Größe aufweisen.

7. Schall-Absorber nach einem oder mehreren der vorhergehenden Ansprüche, dadurch gekennzeichnet, daß die Hohlkammern (4) eine unterschiedliche Höhe aufweisen.

8. Schall-Absorber nach einem oder mehreren der vorhergehenden Ansprüche, dadurch gekennzeichnet, daß das Bodenteil (3) und das Strukturteil (2) unterschiedliche (Ausgangs-) Wandstärken aufweisen.

9. Schall-Absorber nach einem oder mehreren der vorhergehenden Ansprüche, dadurch gekennzeichnet, daß in dem Strukturteil (2) und dem Bodenteil (3) übereinstimmende Knicklinien (17, 18) ausgebildet sind, zur Abknickung eines Absorber-Teilbereiches (19).

10. Schall-Absorber nach einem oder mehreren der vorhergehenden Ansprüche, dadurch gekennzeichnet, daß die Knicklinien (17, 18) filmgelenkig ausgebildet sind.

11. Schall-Absorber nach einem oder mehreren der vorhergehenden Ansprüche, dadurch gekennzeichnet, daß der abgeknickte Absorber-Teilbereich (19) mit dem weiteren Teilbereich (20) fest verbunden ist.

## Claims

1. Sound adsorber (1) with a bottom portion (3) and a structural portion (2), wherein in the structural portion (2) are formed hollow chambers (4) which comprise chamber walls (5, 5', 6, 6') and are box-shaped or cup-shaped and, when sealed off from the outside, belong to a common air space trapped between the structural portion (2) and the bottom portion (3), and wherein furthermore the bottom portion (3) is connected e.g. welded to the structural portion (2) and the hollow chambers (4) are open on one side, characterised in that between the bottom portion (3) and the structural portion (2) in the region of the hollow chambers (4) are formed welds (9, 9') between the chamber walls (6, 6', 5, 5') of the structural portion (2) and the bottom portion (3), in that the welds (9, 9') are spot or line welds and in that hollow chambers (4) are formed whose chamber walls (5, 5', 6, 6') with essentially the same height extent are partially welded to the bottom portion (3) and partially directed towards the bottom portion (3) in freely projecting relationship, leaving an air gap (a) between an end face (5", 6") of the chamber wall (5, 5', 6, 6') and the bottom portion (3).

2. Sound adsorber according to claim 1, characterised in that an integral transition on the edge side is formed between the structural portion (2) and the bottom portion (3).

3. Sound adsorber according to one or more of the preceding claims, characterised in that the welds (9, 9') are island welds.

4. Sound adsorber according to one or more of the preceding claims, characterised in that the welds (9, 9') are offset from each other.

5. Sound adsorber according to one or more of the preceding claims, characterised in that in the case of line welds (9, 9') paths arranged at right angles to each other are formed.

6. Sound adsorber according to one or more of the preceding claims, characterised in that the hollow chambers (4) have different sizes.

7. Sound adsorber according to one or more of the preceding claims, characterised in that the hollow chambers (4) have different heights.

8. Sound adsorber according to one or more of the preceding claims, characterised in that the bottom portion (3) and the structural portion (2) have different (initial) wall thicknesses.

9. Sound adsorber according to one or more of the preceding claims, characterised in that in the structural portion (2) and the bottom portion (3) are formed corresponding bend lines (17, 18), for bending off a partial absorber region (19).

10. Sound adsorber according to one or more of the preceding claims, characterised in that the bend lines (17, 18) are constructed like film joints.

11. Sound adsorber according to one or more of the preceding claims, characterised in that the bent partial absorber region (19) is rigidly connected to the remaining partial region (20)

## Revendications

1. Absorbant acoustique (1) équipé d'une partie de fond (3) et d'une partie de structure (2), dans lequel dans la partie de structure (2) sont réalisées des chambres creuses (4) présentant des parois de chambres (5, 5', 6, 6') et qui sont réalisées en forme de petites boîtes respectivement de godets et, au niveau de la fermeture vers l'extérieur, appartenant à un espace d'air commun, inclus entre la partie de structure (2) et la partie de fond (3), et dans lequel en outre la partie de fond (3) est reliée à la partie de structure (2), par exemple par soudure, et les chambres creuses (4) sont ouvertes sur un côté, caractérisé en ce qu'entre la partie de fond (3) et la partie de structure (2), sont réalisés, dans la zone des chambres creuses (4), des soudures (9, 9') entre les parois de chambres (5, 5', 6, 6') de la partie de structure (2) et de la partie de fond (3), en ce que les soudures (9, 9') s'étendent sous forme de points ou de lignes, et en ce que sont constituées des chambres creuses (4) dont les parois de chambres (5, 5', 6, 6') sont soudées partiellement à la partie de fond (3) avec une étendue en hauteur sensiblement identique et sont dirigées sur la partie de fond (3) en étant partiellement en porte-à-faux, en laissant subsister un intervalle d'air (a) entre une face frontale (5", 6") de la paroi de chambre (5. 5', 6, 6') et la partie de fond (3).

2. Absorbant acoustique selon la revendication 1, caractérisé en ce qu'une transition intégrale du côté bordure est constituée entre la partie de structure (2) et la partie de fond (3).

3. Absorbant acoustique selon l'une ou plusieurs des revendications précédentes, caractérisé en ce que les soudures (9, 9') s'étendent à la façon d'îles.

4. Absorbant acoustique selon l'une ou plusieurs des revendications précédentes, caractérisé en ce que les soudures (9, 9') sont disposées de façon décalée les unes par rapport aux autres.

5. Absorbant acoustique selon l'une ou plusieurs des revendications précédentes, caractérisé en ce que les soudures (9, 9') en ligne sont réalisées avec des parcours disposés à angles droits les uns par rapport aux autres.

6. Absorbant acoustique selon l'une ou plusieurs des revendications précédentes, caractérisé en ce que les chambres creuses (4) présentent des tailles différentes.

7. Absorbant acoustique selon l'une ou plusieurs des revendications précédentes, caractérisé en ce que les chambres creuses (4) ont des hauteurs différentes.

8. Absorbant acoustique selon l'une ou plusieurs des revendications précédentes, caractérisé en ce que la partie de fond (3) et la partie de structure (2) ont des épaisseurs de parois (initiales) différentes.

9. Absorbant acoustique selon l'une ou plusieurs des revendications précédentes, caractérisé en ce que, dans la partie de structure (2) et la partie de fond (3) sont réalisées des lignes de pliage correspondantes (17, 18) pour permettre le pliage d'une zone partielle (19) de l'absorbant.

10. Absorbant acoustique selon l'une ou plusieurs des revendications précédentes, caractérisé en ce que les lignes de pliage (17, 18) sont réalisées par une articulation du genre film.

11. Absorbant acoustique selon l'une ou plusieurs des revendications précédentes. caractérisé en ce que la zone partielle d'absorbant pliée (19) est reliée rigidement à l'autre zone partielle (20).
